# EUROPEAN PATENT SPECIFICATION

(11) **EP 3 819 565 B1**
(45) Date of publication and mention of the grant of the patent: **05.04.2023**
(21) Application number: 18925696.9
(22) Date of filing: 06.07.2018
(51) Int. Cl.: F25B 49/02, F25B 13/00, F25B 41/24, F25B 49/00

(54) **REFRIGERATION CYCLE DEVICE**
KÄLTEKREISLAUFVORRICHTUNG
DISPOSITIF À CYCLE FRIGORIFIQUE

(43) Date of publication of application: 12.05.2021
(73) Proprietor: Mitsubishi Electric Corporation, Tokyo 100-8310 (JP)
(72) Inventor: OCHIAI, Yasutaka, Tokyo 100-8310 (JP); NAKANO, Haruo, Tokyo 100-8310 (JP)
(74) Representative: Studio Torta S.p.A.
(86) International application number: PCT/JP2018/025708
(87) International publication number: WO 2020/008624

(56) References cited:
- JP-A- 2000 249 385
- JP-A- 2000 249 385
- JP-A- 2005 241 050
- JP-A- 2005 241 050
- JP-A- 2014 145 565
- JP-A- 2014 145 565

## Description

### Technical Field

The present disclosure relates to a refrigeration cycle apparatus including a refrigerant circuit that circulates refrigerant.

### Background Art

Patent Literature 1 discloses an air-conditioning system. The air-conditioning system includes a solenoid valve disposed in a pipe so as to separate an indoor unit and an outdoor unit from each other, an outdoor-unit-side pressure sensor that detects a refrigerant pressure on the outdoor unit side, and an indoor-unit-side pressure sensor that detects a refrigerant pressure on the indoor unit side. In this air-conditioning system, an estimated normal pressure (that is, a saturated pressure of the outdoor temperature) of refrigerant on the outdoor unit side is calculated based on the outdoor temperature, and the leakage of refrigerant on the outdoor unit side is determined by comparing the pressure of refrigerant detected by the outdoor-unit-side pressure sensor with the estimated normal pressure. In addition, in this air-conditioning system, the estimated normal pressure (that is, the saturated pressure of the room temperature) of refrigerant on the indoor unit side is calculated based on the indoor temperature, and the leakage of refrigerant is determined on the indoor unit side by comparing the pressure of refrigerant detected by the indoor-unit-side pressure sensor with the estimated normal pressure.

Patent Literature 1: Japanese Unexamined Patent Application Publication No. 2005-241050

### Summary of Invention

### Technical Problem

However, in the air-conditioning system of Patent Literature 1, if refrigerant on the outdoor unit side or on the indoor unit side is all vaporized by an increase in the ambient temperature, and is turned to be a superheated gas, the pressure of refrigerant becomes lower than the estimated normal pressure even if a leakage of refrigerant does not occur. In addition, in the case where a pump-down operation is performed before the compressor is stopped, even if there is no leakage of refrigerant, the pressure of refrigerant on the indoor unit side becomes lower than the estimated normal pressure. Therefore, the air-conditioning system of Patent Literature 1, there is a problem that erroneous detection occurs that there is a leakage of refrigerant while no leakage of refrigerant actually occurs, or there is a problem that it becomes difficult to detect a leakage of refrigerant in the first place.

The present disclosure has been made to solve the problems described above, and an object thereof is to provide a refrigeration cycle apparatus capable of detecting a leakage of refrigerant more accurately.

### Solution to Problem

The refrigeration cycle apparatus according to the present invention is defined in claim 1.

### Advantageous Effects of Invention

According to the present disclosure, leakage of refrigerant can be detected more accurately.

### Brief Description of Drawings

[Fig. 1] Fig. 1 is a refrigerant circuit diagram illustrating a schematic configuration of a refrigeration cycle apparatus according to Embodiment 1 of the present disclosure.
[Fig. 2] Fig. 2 is a flowchart illustrating an example of the flow of control executed by a controller 201 of the refrigeration cycle apparatus according to Embodiment 1 of the present disclosure.
[Fig. 3] Fig. 3 is a timing diagram illustrating an example of operation timings of a compressor 21, a solenoid valve 23, and an expansion valve 27, and changes over time in pressure of a third section 103 detected by a pressure sensor 61, in the refrigeration cycle apparatus according to Embodiment 1.
[Fig. 4] Fig. 4 is a p-h diagram illustrating a refrigerant state in a refrigeration cycle apparatus according to Embodiment 1 of the present disclosure.
[Fig. 5] Fig. 5 is a conceptual diagram illustrating an example of the range of a pressure Pa in which it is determined that there is a leakage of refrigerant in the refrigeration cycle apparatus according to Embodiment 1 of the present disclosure.
[Fig. 6] Fig. 6 is a flowchart illustrating an example of the flow of control executed by a controller 201 of the refrigeration cycle apparatus according to Embodiment 2 of the present disclosure.
[Fig. 7] Fig. 7 is a timing diagram illustrating an example of operation timings of a compressor 21, a solenoid valve 23, and an expansion valve 27, and changes over time in pressure of a third section 103 detected by a pressure sensor 61, in the refrigeration cycle apparatus according to Embodiment 2.
[Fig. 8] Fig. 8 is a conceptual diagram illustrating an example of the range of a pressure Pa in which it is determined that there is a leakage of refrigerant in the refrigeration cycle apparatus according to Embodiment 2 of the present disclosure.
[Fig. 9] Fig. 9 is a refrigerant circuit diagram illustrating a schematic configuration of a refrigeration cycle apparatus according to Embodiment 3 of the present disclosure.
[Fig. 10] Fig. 10 is a p-h diagram illustrating a refrigerant state in a refrigeration cycle apparatus according to Embodiment 4 of the present disclosure.

### Description of Embodiments

### Embodiment 1

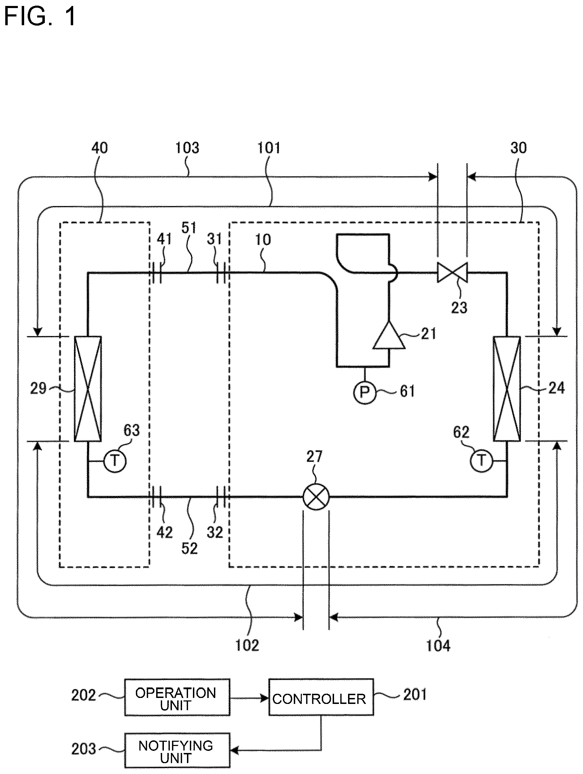

A refrigeration cycle apparatus according to Embodiment 1 of the present invention will be described. Fig. 1 is a refrigerant circuit diagram illustrating a schematic configuration of the refrigeration cycle apparatus according to Embodiment 1 of the present invention.

In Embodiment 1, an air-conditioning apparatus capable of performing a cooling operation is exemplified as the refrigeration cycle apparatus.

As illustrated in Fig. 1, the refrigeration cycle apparatus includes a refrigeration cycle circuit 10 in which refrigerant circulates, a controller 201 that controls operations of the entire refrigeration cycle apparatus including the refrigeration cycle circuit 10, an operation unit 202 that receives various operations performed by the user, and a notifying unit 203 that notifies of a leakage of refrigerant when there is a leakage of refrigerant from the refrigeration cycle circuit 10. The refrigeration cycle circuit 10 is formed by connecting a compressor 21, a solenoid valve 23 (an example of a first valve), an outdoor heat exchanger 24, an expansion valve 27 (an example of a second valve), and an indoor heat exchanger 29 sequentially and annularly through a refrigerant pipe. The solenoid valve 23 is provided on the downstream side of the compressor 21 and on the upstream side of the outdoor heat exchanger 24 in the refrigeration cycle circuit 10. The expansion valve 27 is provided on the downstream side of the outdoor heat exchanger 24 and on the upstream side of the indoor heat exchanger 29 in the refrigeration cycle circuit 10.

The refrigeration cycle apparatus has, for example, an outdoor unit 30 which is installed outdoors, and an indoor unit 40 which is installed indoors, and at least the outdoor heat exchanger 24 is housed in the outdoor unit 30. The outdoor unit 30 of the Embodiment 1, in addition to the outdoor heat exchanger 24, a compressor 21, a solenoid valve 23, an expansion valve 27, a pressure sensor 61 and a temperature sensor 62 are housed. At least the indoor heat exchanger 29 is housed in the indoor unit 40. The indoor unit 40 of the Embodiment 1, in addition to the indoor heat exchanger 29, the temperature sensor 63 is housed.

The outdoor unit 30 and the indoor unit 40 are connected via an extension pipe 51 and an extension pipe 52 which are parts of the refrigerant pipe. One end of the extension pipe 51 is connected to the outdoor unit 30 via a joint portion 31. The other end of the extension pipe 51 is connected to the indoor unit 40 via a joint portion 41. The extension pipe 51 is a gas pipe that mainly distributes gas refrigerant. One end of the extension pipe 52 is connected to the outdoor unit 30 via a joint portion 32. The other end of the extension pipe 52 is connected to the indoor unit 40 via a joint portion 42. The extension pipe 52 is mainly the liquid pipe that allows the liquid refrigerant to flow.

The compressor 21 is a fluidic machine that suctions and compresses a low-pressure gas refrigerant and discharges the compressed refrigerant as a high-pressure gas refrigerant. As the compressor 21, for example, an inverter-driven compressor or the like which can adjust the rotational speed is used. The solenoid valve 23 is a valve that is opened and closed under the control of the controller 201. The opening and closing timing of the solenoid valve 23 will be described later. The outdoor heat exchanger 24 is a heat exchanger that functions as a condenser. In the outdoor heat exchanger 24, heat exchange is performed between a refrigerant which circulates inside and the outdoor air blown by an outdoor fan (not shown).

The expansion valve 27 is a valve that reduces the pressure of refrigerant by expansion by throttling. As the expansion valve 27, an electronic expansion valve of which the opening degree is adjustable by the controller 201 is used. The expansion valve 27 is normally controlled to be in an open state during the operation of the compressor 21. The opening degree of the expansion valve 27 in the open state is controlled so that the degree of superheat or the degree of subcooling of refrigerant approaches the target value. Further, the expansion valve 27 is controlled to a closed state during the period in which the compressor 21 is stopped. Examples of the opening and closing timings of the expansion valve 27 will be described later. The indoor heat exchanger 29 is a heat exchanger which functions as an evaporator. In the indoor heat exchanger 29, heat exchange is performed between a refrigerant which circulates therein and the indoor air blown by the indoor fan (not shown).

For the purpose of convenience, in the refrigeration cycle circuit 10, a section between the outdoor heat exchanger 24 and the indoor heat exchanger 29 including the compressor 21 is defined as a first section 101, and in the refrigeration cycle circuit 10, a section between the outdoor heat exchanger 24 and the indoor heat exchanger 29 not including the compressor 21 is defined as a second section 102. In this case, the solenoid valve 23 is provided at any position in the first section 101, and the expansion valve 27 is provided at any position in the second section 102. Further, for the purpose of convenience, in the refrigeration cycle circuit 10, a section between the solenoid valve 23 and the expansion valve 27 including the indoor heat exchanger 29 is defined as a third section 103, and in the refrigeration cycle circuit 10, a section between the solenoid valve 23 and the expansion valve 27 including the outdoor heat exchanger 24 is defined as a fourth section 104. In Embodiment 1, the solenoid valve 23 is provided in the first section 101 as the first valve. However, a motor valve, an expansion valve, or a check valve may be provided in the first section 101 as the first valve. Further, in Embodiment 1, the expansion valve 27 is provided in the second section 102 as the second valve. However, a solenoid valve, a motor valve or the like may be provided in the second section 102 as the second valve.

Both the first valve and the second valve are configured so as to be able to prevent the flow of refrigerant from the fourth section 104 toward the third section 103 during the period in which at least the compressor 21 is stopped.

When the first valve is a solenoid valve, a motor valve or an electronic expansion valve, the first valve is controlled by the controller 201 to be closed at least during a period when the compressor 21 is stopped. Thus, the first valve, during the period in which at least the compressor 21 is stopped, prevents the flow of refrigerant from the fourth section 104 toward the third section 103. When the first valve is a check valve, the first valve is provided to allow flow of refrigerant from the third section 103 to the fourth section 104 and to prevent flow of refrigerant from the fourth section 104 to the third section 103.

The second valve is controlled by the controller 201 so as to be closed at least during the period in which the compressor 21 is stopped. Thus, at least during the period in which the compressor 21 is stopped, prevents the flow of refrigerant from the fourth section 104 toward the third section 103.

The pressure sensor 61 is provided in the third section 103 of the refrigeration cycle circuit 10. The pressure sensor 61 is configured to detect the pressure of refrigerant in the third section 103 and to output a detection signal. The pressure sensor 61 is provided between the expansion valve 27 and the compressor 21 of the third section 103 so that a low-pressure side pressure of the refrigeration cycle circuit 10 can be detected. Furthermore, in order to allow a high-pressure-side pressure of the refrigeration cycle circuit 10 to be detected, a pressure sensor other than the pressure sensor 61 may be provided on the discharge side of the compressor 21.

The temperature sensor 62 is provided on the downstream side of the outdoor heat exchanger 24 and on the upstream side of the expansion valve 27 of the refrigerant cycle circuit 10. The temperature sensor 62 is configured to detect the temperature of refrigerant flowing out from the outdoor heat exchanger 24 and output a detection signal.

The temperature sensor 63 is provided on the downstream of the expansion valve 27 and on the upstream side of the indoor heat exchanger 29 of the refrigeration cycle circuit 10. The temperature sensor 63 is configured to detect the temperature of refrigerant flowing into the indoor heat exchanger 29 is configured to output a detection signal. In the temperature sensor 63 during the period in which the compressor 21 is stopped, the ambient temperature of the third section 103 on the indoor unit 40 side is detected.

As refrigerant circulating in the refrigeration cycle circuit 10, a flammable refrigerant is used, for example. Here, flammable refrigerant refers to refrigerant that has a flammability of a slightly flammable level or higher (e.g., a 2L in the classification of ASHRAE34 or higher). As refrigerant circulating in the refrigeration cycle circuit 10, non-combustible refrigerant or toxic refrigerant may be used. In Embodiment 1, a single-component refrigerant, an azeotropic refrigerant mixture, or a near azeotropic refrigerant mixture is used as refrigerant. The saturation liquid pressure and the saturation gas pressure of each of these refrigerants at the same temperature are substantially equal.

The controller 201 includes a microcomputer including a CPU, a ROM, a RAM, and an I/O port. The controller 201 controls operations of the entire refrigeration cycle apparatus, including operations of the compressor 21, the solenoid valve 23, and the expansion valve 27, based on signals such as detection signals from various sensors provided in the refrigeration cycle circuit 10 and an operation signal from the operation unit 202. The controller 201 may be provided in either the outdoor unit 30 or the indoor unit 40. The controller 201 may further include an outdoor unit controller provided in the outdoor unit 30, and an indoor unit controller provided in the indoor unit 40 and capable of communicating with the outdoor unit controller.

The operation unit 202 is configured so as to accept various operations by the user such as an operation for starting the operation and an operation for stopping the operation of the refrigeration cycle apparatus. When various operations by the user is performed by the operation unit 202, an operation signal corresponding to the operation performed is output to the controller 201 from the operation unit 202. The operation unit 202, for example, is provided in the indoor unit 40.

The notifying unit 203 is configured so as to notify, in accordance with a command issued from the controller 201, various information such as leakage information indicating that there is a leakage of refrigerant to the outside. The notifying unit 203 has at least one of a display unit that visually notifies information and an audio output unit that audibly notifies of information. The notification unit 203 is provided in, for example, the indoor unit 40.

The operation of the refrigeration cycle unit will be described. First, the operation when the operation of the refrigeration cycle apparatus is started will be described. When the user performs an operation for starting the operation of the refrigeration cycle apparatus by using the operation unit 202, the operation unit 202 outputs an operation start signal to the controller 201. Upon receiving the operation start signal, the controller 201 starts the operation of the compressor 21, and brings the solenoid valve 23 and the expansion valve 27 into the open state. Thus, a cooling operation of the refrigeration cycle circuit 10 is started. The operating frequency of the compressor 21 is controlled such that, for example, each of the high-pressure-side pressure and the low-pressure-side pressure of the refrigeration cycle circuit 10 approaches a target value. The opening degree of the expansion valve 27 is controlled such that, for example, the degree of superheat of the refrigerant to be suctioned into the compressor 21 approaches the target value.

High-temperature and high-pressure gaseous refrigerant discharged from the compressor 21 flows into the outdoor heat exchanger 24 via the solenoid valve 23 in the open state. In the outdoor heat exchanger 24, heat exchange is performed between the refrigerant and the outdoor air, and the condensation heat of the refrigerant is radiated to the outdoor air. As a result, the refrigerant flowing into the outdoor heat exchanger 24 is condensed to be high-pressure liquid refrigerant. The high-pressure liquid refrigerant flowing out of the outdoor heat exchanger 24 is depressurized by the expansion valve 27, and is turned to be low-pressure two-phase refrigerant. The low-pressure two-phase refrigerant flows into the indoor heat exchanger 29 via the extension pipe 52. In the indoor heat exchanger 29, heat exchange between the refrigerant and the indoor air is performed, and the evaporation heat of the refrigerant is removed from the indoor air. Thus, refrigerant flowing into the indoor heat exchanger 29 evaporates and is turned to be low-pressure gas refrigerant. In addition, the indoor air is cooled by the heat removal action of the refrigerant. The low pressure gaseous refrigerant evaporated in the indoor heat exchanger 29 is suctioned into the compressor 21 via an extension pipe 51. The refrigerant that is suctioned into the compressor 21 is compressed into high-temperature, high-pressure gaseous refrigerant. In the cooling operation, the above cycle is repeated continuously. Here, the pressure of refrigerant in refrigeration cycle circuit 10 is higher than the atmospheric pressure even in the low-pressure condition.

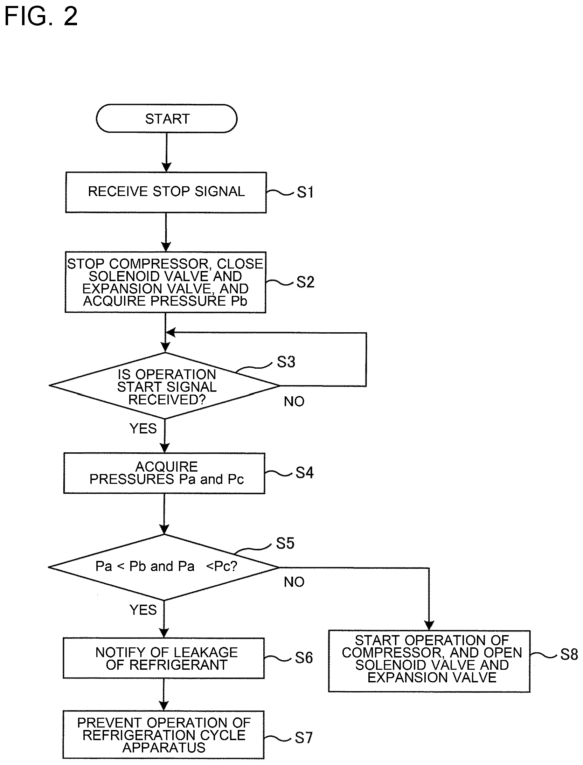

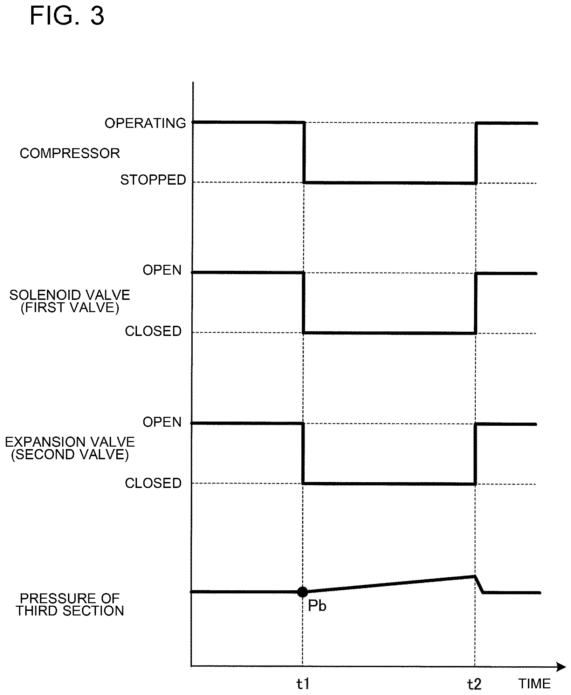

Next, the operation from when refrigeration cycle apparatus stops until it restarts the operation will be described. Fig. 2 is a flowchart showing an exemplary flow of control executed in the controller 201 of the refrigeration cycle apparatus according to the Embodiment 1. Fig. 3 is a timing diagram illustrating an example of operation timings of the compressor 21, the solenoid valve 23, and the expansion valve 27, and changes over time in pressure of the third section 103 detected by the pressure sensor 61, in the refrigeration cycle apparatus according to Embodiment 1. In this Embodiment, it is presumed that a pump-down operation is not executed when the compressor 21 is stopped.

During the period in which the refrigeration cycle apparatus is operating (before the time t1 in Fig. 3), the compressor 21 is operating at a predetermined frequency, the solenoid valve 23 as an example of the first valve is in the open state, and the expansion valve 27 as an example of the second valve is in the open state at a predetermined opening degree. When the operation for stopping the operation of the refrigeration cycle apparatus is performed by the user by using the operation unit 202, a stop signal is output from the operation unit 202 to the controller 201. Upon receiving the stop signal (step S1 in Fig. 2), the controller 201 stops the compressor 21, performs control to close the solenoid valve 23 and the expansion valve 27 (step S2 in Fig.2 and t1 in Fig. 3). Since the solenoid valve 23 and the expansion valve 27 are brought into the closed state, the space in the third section 103 including the indoor heat exchanger 29 is separated from the fourth section 104.

During the operation of the refrigeration cycle apparatus, most of the third section 103 is at the low-pressure-side pressure, and most of the fourth section 104 is at the high-pressure-side pressure. Therefore, after the third section 103 and the fourth section 104 are separated from each other, the pressure in the third section 103 becomes lower than the pressure in the fourth section 104. Further, during the operation of the refrigeration cycle apparatus, refrigerant density of the third section 103 containing a large amount of gas refrigerant is smaller than refrigerant density of the fourth section 104 containing a large amount of liquid refrigerant. Therefore, after the third section 103 and the fourth section 104 are separated from each other, the amount of refrigerant in the third section 103 is usually smaller than the amount of refrigerant in the fourth section 104.

Further, in the same step S2, the controller 201 acquires a pressure Pb of the third section 103 when the compressor 21 is stopped, based on a detection signal from the pressure sensor 61. The pressure Pb is used as one of reference values for determining whether there is a leakage of refrigerant during the period in which the compressor 21 is stopped. Therefore, the value of the pressure Pb is stored in the controller 201 until the compressor 21 is restarted. Note that the pressure Pb may be acquired after the low-pressure-side pressure and the high-pressure-side pressure in the third section 103 are equalized through the compressor 21 in the stopped state. Generally, the most part of the third section 103 is a section that is at a low-pressure-side pressure during the period in which the refrigeration cycle apparatus is in operation. Therefore, the pressure of the third section 103 after the pressure equalization does not greatly increase from the low-pressure-side pressure during the period in which the refrigeration cycle apparatus is in operation. In the graph of Fig. 3, changes in pressure before and after the pressure equalization in the third section 103 are ignored. The pressure Pb of the third section 103 may be acquired based on a detection signal from the pressure sensor provided on the discharge side of the compressor 21, after the high-pressure-side pressure and the low-pressure-side pressure in the third section 103 are equalized.

During the period in which the compressor 21 is stopped, the solenoid valve 23 and the expansion valve 27 check the flow of refrigerant from the fourth section 104 toward the third section 103. Therefore, the third section 103 is maintained at a pressure lower than the pressure of the fourth section 104. However, during the period in which the compressor 21 is stopped, the pressure of the third section 103 gradually increases due to heat removed from the surroundings and deposition of refrigerant dissolved in oil (time t1 to t2 in Fig. 3). That is, the pressure Pb of the third section 103 when the compressor 21 is stopped is substantially the lowest in changes in the pressure of the third section 103 during the period in which the compressor 21 is stopped.

Thereafter, upon receiving the operation start signal from the operation unit 202 (step S3 in Fig. 2), the controller 201 acquires the pressure Pa and the pressure Pc at that time (step S4) before starting the operation of the refrigeration cycle apparatus. The pressure Pa is a pressure of the third section 103 detected by the pressure sensor 61. The pressure Pc is the saturation gas pressure of the ambient temperature of the third section 103. The ambient temperature of the third section 103 is detected by the temperature sensor 63 provided in the third section 103. If a plurality of temperature sensors 63 are provided in the third section 103, the lowest temperature of the detected temperature of these temperature sensors is selected as the ambient temperature of the third section 103. The temperature sensor that detects the temperature of the third section 103 is provided only in the indoor unit 40 in Embodiment 1, but may be provided in the outdoor unit 30, the extension pipe 51 or the extension pipe 52. Further, as the ambient temperature of the third section 103, the indoor air temperature or the outdoor air temperature may be selected.

Then, the controller 201 determines whether the pressure Pb detected when the compressor 21 is stopped and the pressures Pa and Pc at the current time point satisfy the relationships Pa < Pb and Pa < Pc (step S5). When both the relationship Pa < Pb and the relationship Pa <Pc are satisfied, the process proceeds to step S6. When at least one of the relationship Pa < Pb and the relationship Pa < Pc is not satisfied, the process proceeds to step S8.

As described later, when both the relationship of Pa < Pc and the relationship of Pa < Pb are satisfied, it can be determined that leakage of refrigerant occurs in the third section 103 including the indoor heat exchanger 29. Therefore, in step S6, the controller 201 performs a process of notifying the leakage of refrigerant to the notifying unit 203. In S7, the controller 201 performs a process of prohibiting the refrigeration cycle apparatus from starting to operate. Thus, the compressor 21 is maintained in a stopped state, and the solenoid valve 23 and the expansion valve 27 are maintained in a closed state, whereby a state in which the third section 103 including the indoor heat exchanger 29 is separated from the fourth section 104 continues. Since the amount of refrigerant present in the third section 103 is smaller than the amount of refrigerant present in the fourth section 104, even if leakage of refrigerant occurs in the third section 103 including the indoor heat exchanger 29 or the like, it is possible to suppress the amount of leakage of refrigerant to indoors. In addition, since the operation of the refrigeration cycle apparatus is prevented from being started when there is a leakage of refrigerant in the third section 103, it is possible to prevent an increase in the amount of leakage of refrigerant due to the operation of the compressor 21.

On the other hand, if at least one of the relationship of Pa < Pc and the relationship of Pa < Pb is not satisfied, it can be determined that the leakage of refrigerant does not occur in the third section 103. Therefore, in step S8, the controller 201 starts the operation of the compressor 21, and brings the solenoid valve 23 and the expansion valve 27 into the open state, without causing the notifying unit 203 to notify of a leakage of refrigerant. Thus, the operation of the refrigeration cycle apparatus is started (time t2 in Fig. 3).

Here, in Embodiment 1, the process of acquiring the pressure Pa and the pressure Pc (step S4), and the determination process using the acquired pressures Pa and Pc and the previously acquired pressure Pb (step S5) are performed only immediately before the start of operation of the refrigeration cycle apparatus in response to the reception of the operation start signal. However, the processes of steps S4 and S5 may be performed periodically at predetermined time intervals during the period in which the refrigeration cycle apparatus is stopped.

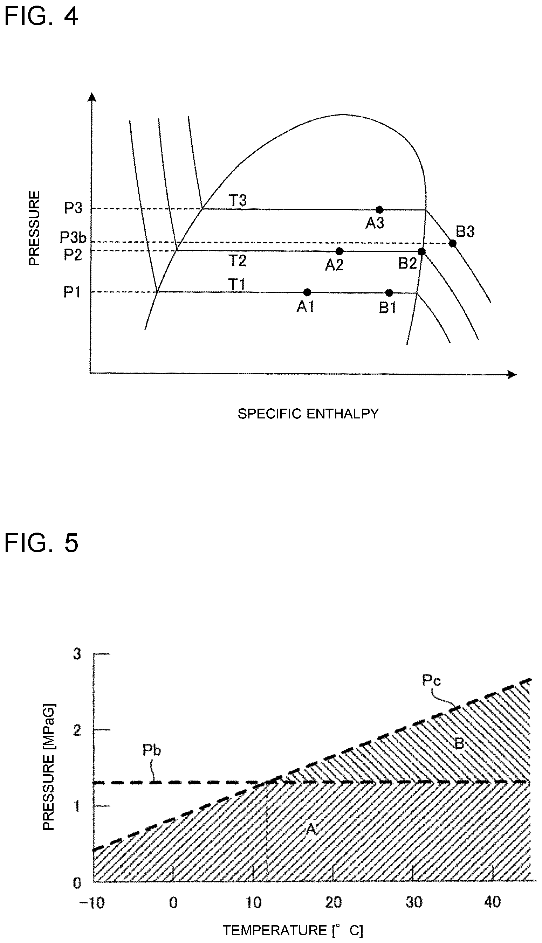

Embodiment 1 describes the principles that enable more accurate detection of a leakage of refrigerant. Fig. 4 is a p-h line showing the state of the refrigeration cycle apparatus according to Embodiment 1. The horizontal axis of Fig. 4 represents the specific enthalpy, and the vertical axis represents the pressure. It is assumed that the pressure of the refrigerant present in a closed space at an ambient temperature T1 is P1, as illustrated in Fig. 4 (state A1). Since the state A1 is a two-phase gas-liquid state, the pressure P1 is equal to the saturated pressure of the refrigerant at ambient temperature T1. When the ambient temperature of the closed space increases from T1 to T2, the pressure of the refrigerant increases from P1 to P2 (state A2). Since the state A2 is a two-phase gas-liquid state, the pressure P2 is equal to the saturation pressure of the ambient T2 refrigerant. Further, when the ambient temperature of the closed space increases from T2 to T3, the pressure of the refrigerant increases from P2 to P3 (state A3). Since the state A3 is a two-phase gas-liquid state, the pressure P3 is equal to the saturation pressure of the refrigerant at the ambient temperature T3. Thus, if the liquid refrigerant is constantly present in the closed space, the pressure of the refrigerant changes with changes in the ambient temperature, and becomes equal to the saturation pressure of the ambient temperature. Therefore, when the pressure of the refrigerant is lower than the saturated pressure of the ambient temperature, it can be determined that refrigerant is leaking from the closed space. Therefore, if the liquid refrigerant is constantly present in the closed space, a leakage of refrigerant from the closed space can be determined only by comparing the pressure of the refrigerant with the saturation pressure of the ambient temperature.

In the following, it is assumed that the pressure of the refrigerant present in the closed space at the ambient temperature T1 is P1 as in the state A1, but the state of the refrigerant is a state B1 in which the quality is higher than that in the state A1. Since the state B1 is a two-phase gas-liquid state, the pressure P1 is equal to the saturation gas pressure of refrigerant at the ambient temperature T1. When the ambient temperature of the closed space increases from T1 to T2, the pressure of refrigerant increases from P1 to P2 (state B2). Since the state B2 is a saturated gaseous state, the pressure P2 is equal to the saturation pressure of the refrigerant at the ambient temperature T2. Thereafter, when the ambient temperature of the closed space increases from T2 to T3, the state of refrigerant changes to a state B3. Since the state B3 is a superheated gas state, the pressure P3b in the state B3 is lower than the saturation pressure P3 of refrigerant at the ambient temperature T3. Thus, when the liquid refrigerant is no longer present in the closed space, the pressure of refrigerant becomes lower than the saturation pressure of the ambient temperature. Therefore, considering that refrigerant in the closed space may become a superheated gas, it is impossible to determine whether there is a leakage of refrigerant from the closed space only by comparing the pressure of the refrigerant with the saturated pressure of the ambient temperature.

Fig. 5 is a conceptual diagram illustrating an example of the range of the pressure Pa when it is determined that there is a leakage of refrigerant in the refrigeration cycle apparatus according to Embodiment 1 of the present disclosure. The horizontal axis of Fig. 5 represents the temperature [degree C], and the vertical axis represents the pressure [MPaG]. In the example shown in Fig. 5, it is assumed that the pressure Pb of the third section 103 acquired when the compressor 21 is stopped is about 1.3 MPaG. Further, the refrigerant in the third section 103 when the compressor 21 is stopped is assumed to be in the saturated gaseous state. The saturation gas pressure Pc of the ambient temperature acquired during the period in which the compressor 21 is stopped is high as the ambient temperature is high. The area A indicated by the hatching lines rising upward to the right in Fig. 5 is a range of pressures Pa in which the relationships of Pa < Pb and Pa < Pc are satisfied. In Fig. 5, the area B indicated by hatching lines rising upward to the left is the range of the pressure Pa that satisfies the relationships Pa < Pb and Pa < Pc.

When determining whether there is a leakage of refrigerant is conducted only by comparing the pressure Pa of the refrigerant and the saturation gas pressure Pc of the ambient temperature, when the pressure Pa is within the range of the area A and the area B, it is determined that there is a leakage of refrigerant. However, if the refrigerant is turned to be in a superheated gas state during the period in which the compressor 21 is stopped, even if there is no leakage of refrigerant, the pressure Pa falls into the range of the area B. Therefore, if it is determined that there is a leakage of refrigerant when the pressure Pa is in the range of the area B, an erroneous detection may occur in which it is determined that there is a leakage of refrigerant although there is actually no leakage of refrigerant.

In contrast, in Embodiment 1, a determination as to whether there is a leakage of refrigerant is made not only based on a comparison between the pressure Pa and the saturation gas pressure Pc, but also based on a comparison between the pressure Pa acquired when the compressor 21 is stopped and the pressure Pb. Therefore, it is determined that there is a leakage of refrigerant when the pressure Pa is in the range of the area A, and it is determined that there is no leakage of refrigerant when the pressure Pa is in the range of the area B. That is, in Embodiment 1, when the relationships Pa < Pb and Pa < Pc are satisfied during the time when the compressor 21 is stopped, it is determined that there is a leakage of refrigerant, and a notification of the leakage of refrigerant is made. Meanwhile, when the relationships Pa ≥ Pb and Pa < Pc are satisfied during the period when the compressor 21 is stopped, it is determined that there is no leakage of refrigerant, and a notification of a leakage of refrigerant is not made. Accordingly, in Embodiment 1, it is possible to reduce erroneous detection and erroneous notification of a leakage of refrigerant.

If it is determined that there is a leakage of refrigerant, even if it is incorrectly detected, it takes a long time for the refrigeration cycle apparatus to be checked and inspected before the refrigeration cycle apparatus can be restarted. Although this work does not need to be performed when there is no leakage of refrigerant, the work needs to be performed if an erroneous detection is made. According to Embodiment 1, it is possible to more accurately detect a leakage of refrigerant, and to reduce erroneous detection of a leakage of refrigerant and the resulting erroneous notification. As a result, unnecessary work can be reduced.

In addition, if the compressor 21 is operated in a state where there is a leakage of refrigerant, a larger amount of refrigerant may be leaked. According to the Embodiment 1, it is possible to detect a leakage of refrigerant during the period in which the compressor 21 is stopped, and it is possible to prevent the compressor 21 from being started while refrigerant is leaking. Therefore, even if there is a leakage of refrigerant, the amount of leakage of refrigerant can be reduced as much as possible.

Hereinafter, a specific example of Embodiment 1 will be described with reference to an air-conditioning apparatus using R41 0A as refrigerant. First, in a first example, it is assumed that the air-conditioning apparatus is stopped for a long period of time. For example, the air-conditioning apparatus is stopped in summer, and a determination as to whether there is a leakage of refrigerant is conducted in fall when the outdoor air temperature decreases. It is assumed that the pressure Pb of the third section 103 when the compressor 21 of the air-conditioning apparatus is stopped is 1.23 MPa (corresponding to a saturation temperature of 17 degrees C), and a saturation gas pressure Pc of the ambient temperature (for example, indoor temperature) at the time of determining whether there is a leakage of refrigerant is 1.15 MPa (corresponding to a saturation temperature of 15 degrees C). In this case, if the pressure Pa of the third section 103 at the time of determining whether there is a leakage of refrigerant is less than 1.15 MPa, the relationships Pa < Pb and Pa < Pc are satisfied. Therefore, it is determined that there is a leakage of refrigerant, and the notifying unit 203 notifies of information indicating that there is a leakage of refrigerant.

In a second example, it is assumed that the air-conditioning apparatus is stopped for a short period of time and then a leakage of refrigerant is determined. The pressure Pb of the third section 103 when stopping the compressor 21 of the air-conditioning apparatus is assumed to be 1.23 MPa (corresponding to a saturation temperature of 17 degrees C), and the saturation gas pressure Pc of the ambient temperature when determining whether there is a leakage of refrigerant is assumed to be 1.56 MPa (corresponding to a saturation temperature of 25 degrees C). In this case, if the pressure Pa of the third section 103 when determining whether there is a leakage of refrigerant is less than 1.23 MPa, since the relationships of Pa < Pb and Pa < Pc are satisfied, it is determined that there is a leakage of refrigerant, and information indicating that there is leakage of refrigerant is notified by the notification unit 203.

As described above, the refrigeration cycle apparatus according to Embodiment 1 includes: the refrigeration cycle circuit 10 in which refrigerant circulates, the refrigeration cycle circuit 10 including the compressor 21, the outdoor heat exchanger 24, and the indoor heat exchanger 29; in the refrigeration cycle circuit 10, when a section between the outdoor heat exchanger 24 and the indoor heat exchanger 29 including the compressor 21 is defined as the first section 101, and in the refrigeration cycle circuit 10, when a section between the outdoor heat exchanger 24 and the indoor heat exchanger 29 not including the compressor 21 is defined as the second section 102, the first valve (for example, the solenoid valve 23) provided in the first section 101; the second valve (for example, the expansion valve 27) provided in the second section 102; in the refrigeration cycle circuit 10, when a section between the first valve and the second valve including the indoor heat exchanger 29 is defined as the third section 103, and in the refrigeration cycle circuit 10, when a section between the first valve and the second valve including the outdoor heat exchanger 24 is defined as the fourth section 104, the pressure sensor 61 provided in the third section 103; the temperature sensor 63 configured to detect an ambient temperature of the third section 103; and the notifying unit 203 configured to notify of a leakage of refrigerant. Each of the first valve and the second valve is configured to check the flow of refrigerant from the fourth section 104 toward the third section 103, at least during the period in which the compressor 21 is stopped. The notifying unit 203 notifies of a leakage of refrigerant if the pressure Pb of the third section 103 detected when the compressor 21 is stopped, the pressure Pa of the third section 103 detected during the period in which the compressor 21 is stopped, and the saturation gas pressure Pc of the ambient temperature detected during the period in which the compressor 21 is stopped satisfy relationships Pa < Pb and Pa < Pc.

Due to this configuration, the pressure Pa of the third section 103 during the period in which the compressor 21 is stopped is compared not only with the saturation gas pressure Pc but also with the pressure Pb of the third section 103 detected when the compressor 21 is stopped. Therefore, it is possible to more accurately detect a leakage of refrigerant not only when refrigerant in the third section 103 is in a two-phase state but also when refrigerant in the third section 103 is in a superheated gas state. Further, since it is possible to reduce false detection and false notification of refrigerant leakage, the reliability of the notification of a leakage of refrigerant can be enhanced.

Further, in the refrigeration cycle apparatus according to Embodiment 1, when the pressure Pa, the pressure Pb and the saturation gas pressure Pc satisfy the relationship of Pa ≥ Pb and Pa < Pc, a leakage of refrigerant is not notified by the notifying unit 203. Due to this configuration, it is possible to reduce false detection and false notification of a leakage of refrigerant.

Further, in refrigeration cycle apparatus according to Embodiment 1, a determination regarding whether the pressure Pa, the pressure Pb and the saturation gas pressure Pc satisfy the relationships of Pa < Pb and Pa < Pc is made at least before the operation of the compressor 21 is started. Due to this configuration, even if there is a leakage of refrigerant, an increase in the amount of leaked refrigerant by the operation of the compressor 21 can be prevented.

Further, in the refrigeration cycle apparatus according to Embodiment 1, each of the first valve and the second valve may be either a solenoid valve, a motor-driven valve, an electronic expansion valve, or a check valve.

The refrigeration cycle apparatus according to Embodiment 1 includes: the refrigeration cycle circuit 10 in which refrigerant circulates, the refrigeration cycle circuit 10 including the compressor 21, the outdoor heat exchanger 24, and the indoor heat exchanger 29; in the refrigeration cycle circuit 10, when a section between the outdoor heat exchanger 24 and the indoor heat exchanger 29 including the compressor 21 is defined as the first section 101, and in the refrigeration cycle circuit 10, when a section between the outdoor heat exchanger 24 and the indoor heat exchanger 29 not including the compressor 21 is defined as the second section 102, the first valve (for example, the solenoid valve 23) provided in the first section 101; the second valve (for example, the expansion valve 27) provided in the second section 102; in the refrigeration cycle circuit 10, when a section between the first valve and the second valve including the indoor heat exchanger 29 is defined as the third section 103, and in the refrigeration cycle circuit 10, when a section between the first valve and the second valve including the outdoor heat exchanger 24 is defined as the fourth section 104, the pressure sensor 61 provided in the third section 103; the temperature sensor 63 configured to detect an ambient temperature of the third section 103; and the controller 201. Each of the first valve and the second valve is configured to check the flow of refrigerant from the fourth section 104 toward the third section 103, at least during the period in which the compressor 21 is stopped. The controller 201 is configured to determine that there is a leakage of refrigerant if the pressure Pb of the third section 103 detected when the compressor 21 is stopped, the pressure Pa of the third section 103 detected during the period in which the compressor 21 is stopped, and the saturation gas pressure Pc of the ambient temperature detected during the period in which the compressor 21 is stopped satisfy relationships Pa < Pb and Pa < Pc.

Due to this configuration, the pressure Pa of the third section 103 during the period in which the compressor 21 is stopped, the pressure Pa of the third section 103 is compared not only with the saturation gas pressure Pc but also with the pressure Pb of the third section 103 detected during the period in which the compressor 21 is stopped. Therefore, it is possible to more accurately detect a leakage of refrigerant not only when refrigerant in the third section 103 is in a two-phase state but also when refrigerant in the third section 103 is in a superheated gas state.

In the refrigeration cycle apparatus according to Embodiment 1, the controller 201 is configured to determine that there is no leakage of refrigerant when the pressure Pa, the pressure Pb, and the saturation gas pressure Pc satisfy relationships Pa ≥ Pb and Pa < Pc. With this configuration, it is possible to reduce erroneous detection of a leakage of refrigerant.

### Embodiment 2

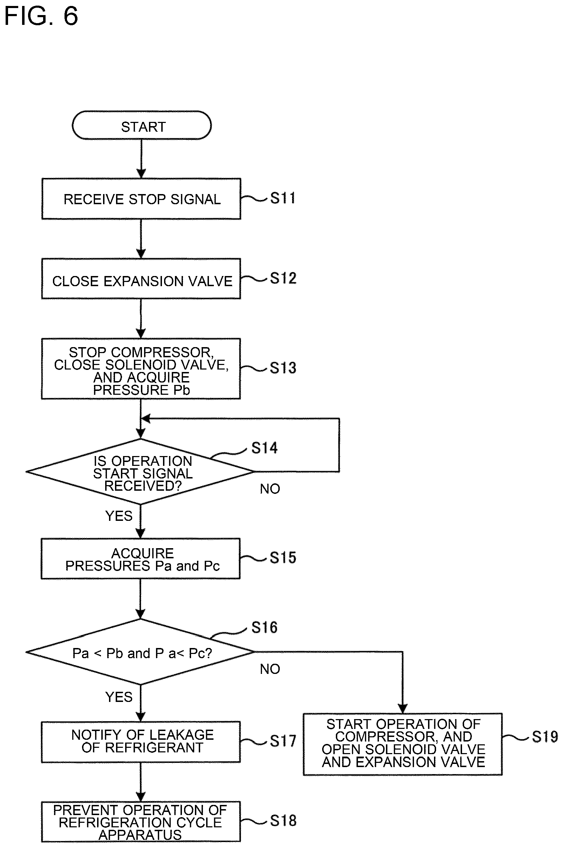

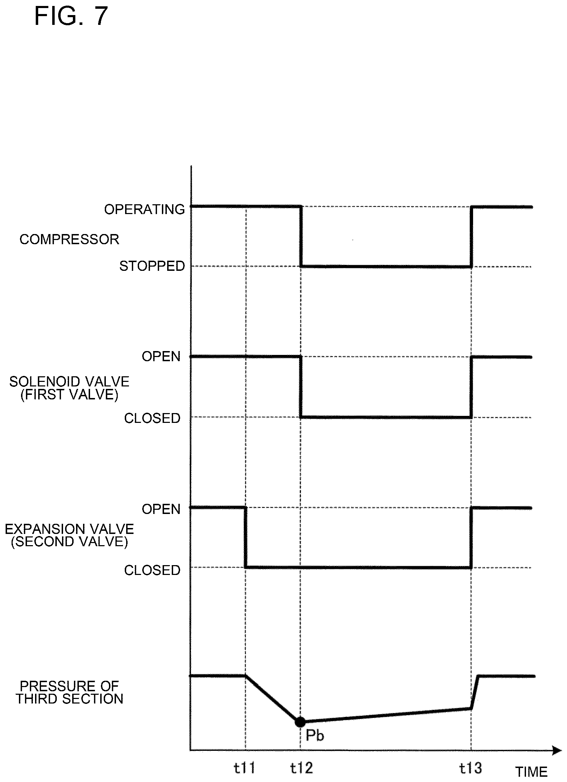

A refrigeration cycle apparatus according to Embodiment 2 of the present disclosure will be described. In Embodiment 2, before the compressor 21 is stopped, a pump-down operation is performed to collect refrigerant of the refrigeration cycle circuit 10 in the fourth section 104. Fig. 6 is a flowchart illustrating an example of the flow of control executed by the controller 201 of the refrigeration cycle apparatus according to Embodiment 2. Fig. 7 is a timing diagram illustrating an example of operation timings of the compressor 21, the solenoid valve 23, and the expansion valve 27, and changes over time in pressure of the third section 103 detected by the pressure sensor 61, in the refrigeration cycle apparatus according to Embodiment 2. The configuration of the refrigeration cycle apparatus according to Embodiment 2 is the same as that of the refrigeration cycle apparatus of Embodiment 1 illustrated Fig. 1.

During the period in which the refrigeration cycle apparatus is in operation (before time t11 in Fig. 7), the compressor 21 operates at a predetermined frequency; the solenoid valve 23 as an example of the first valve is in the open state; and the expansion valve 27 as an example of the second valve is in the open state with a predetermined opening degree. When the user performs an operation for stopping the operation of the refrigeration cycle apparatus by using the operation unit 202, the operation unit 202 outputs a stop signal to the controller 201. Upon receiving the stop signal (step S11 in Fig. 6), the controller 201 controls and brings the expansion valve 27 disposed on the downstream side of the outdoor heat exchanger 24 into the closed state (step S12 in Fig. 6 and time t11 in Fig. 7). The solenoid valve 23 disposed on the upstream side of the outdoor heat exchanger 24 is maintained in the open state. Further, the compressor 21 continues to operate. Thus, a pump-down operation is started, whereby the refrigerant in the refrigeration cycle circuit 10 is collected mostly in the outdoor heat exchanger 24 of the fourth section 104. When the pump-down operation is started, the pressure of the third section 103 detected by the pressure sensor 61 gradually decreases (time t11 to t12 in Fig. 7).

When the suction pressure of the compressor 21 decreases to a threshold pressure, the controller 201 stops the compressor 21, and performs control to bring the solenoid valve 23 into the closed state (step S13 in Fig. 6 and time t12 in Fig. 7). Thus, the pump-down operation ends. As the solenoid valve 23 is brought into the closed state, the third section 103 including the indoor heat exchanger 29 is separated from the fourth section 104. The pressure of the third section 103 after the separation from the fourth section 104 is even lower than the pressure of the third section 103 after the separation from the fourth section 104 in Embodiment 1. Also, the amount of refrigerant in the third section 103 after the separation from the fourth section 104 is even smaller than the amount of refrigerant in the third section 103 after the separation from the fourth section 104 in Embodiment 1.

Further, the controller 201 acquires the pressure Pb of the third section 103 when the compressor 21 is stopped based on a detection signal from the pressure sensor 61. The value of the pressure Pb is stored in the controller 201 until the compressor 21 is restarted.

During the period in which the compressor 21 is stopped, the flow of refrigerant from the fourth section 104 toward the third section 103 is prevented by the solenoid valve 23 and the expansion valve 27. Therefore, the third section 103 is maintained at a pressure lower than the pressure of the fourth section 104. However, during the period in which the compressor 21 is stopped, the pressure in the third section 103 gradually increases due to heat absorption from the surroundings and precipitation of refrigerant dissolved in the oil (time t12 to 13 in Fig. 7). That is, the pressure Pb of the third section 103 during the period in which the compressor 21 is stopped is substantially the lowest value of the pressure change of the third section 103 during the period in which the compressor 21 is stopped.

The subsequent steps S14 to S19 are the same as the steps S3 to S8 in Fig. 2, and therefore descriptions thereof are omitted.

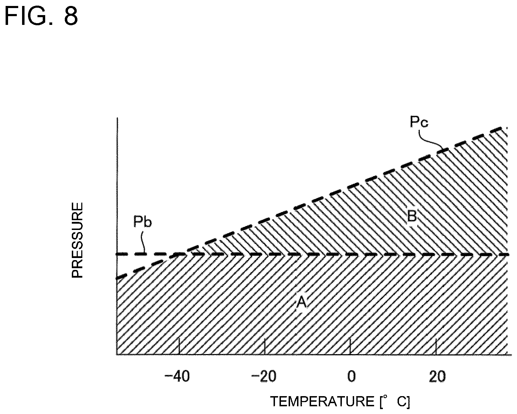

Fig. 8 is a conceptual diagram illustrating an exemplary range of the pressure Pa in the refrigeration cycle apparatus according to Embodiment 2, in which it is determined that leakage of refrigerant occurs. As illustrated in Fig. 8, when a pump-down operation is performed, the pressure Pb of the third section 103 acquired when the compressor 21 is stopped corresponds to a saturation pressure of about -40 degrees C. Therefore, in the normal operating temperature range of the refrigeration cycle apparatus, the relationship Pc > Pb is satisfied. Accordingly, in Embodiment 2, it can be determined that there is a leakage of refrigerant when the relationship Pa < Pb is satisfied, regardless of the value of the pressure Pc.

In the refrigeration cycle apparatus where a pump-down operation is performed before the compressor 21 is stopped, refrigerant of the third section 103 is usually turned to be a superheated gas. Therefore, even if there is no leakage of refrigerant, the pressure Pa of refrigerant is mostly within the range of area B in Fig. 8. Therefore, when the leakage of refrigerant is determined only by comparing the pressure Pa of the refrigerant with the saturation gas pressure Pc of the ambient temperature, the determination is most likely to be erroneous, and hence, it is difficult to determine whether there is a leakage of refrigerant.

In contrast, in Embodiment 2, the pressure Pa is compared with the pressure Pb acquired when the compressor 21 is stopped. Then, if the relationship of Pa < Pb is satisfied, it is determined that there is a leakage of refrigerant, and in other cases, it is determined that there is no leakage of refrigerant. As a result, in Embodiment 2, a leakage of refrigerant can be detected more accurately. Here, in the refrigeration cycle apparatus in which a pump-down operation is performed, if the relationship Pa < Pb is satisfied in the normal operating temperature range, the relationship Pa < Pc is satisfied without the need for comparison.

As explained hereinabove, in the refrigeration cycle apparatus of Embodiment 2, before the compressor 21 is stopped, a pump-down operation for collecting refrigerant in the fourth section 104 is performed. Due to this configuration, even when a pump-down operation is executed, it is possible to more accurately detect whether there is a leakage of refrigerant.

Further, according to Embodiment 2, since refrigerant is collected in the fourth section 104 by a pump-down operation, during the period in which the refrigeration cycle apparatus is stopped, the amount of refrigerant present in the third section 103 including the indoor heat exchanger 29 is further reduced than that in Embodiment 1. Therefore, even if the leakage of refrigerant occurs in the third section 103 such as the indoor heat exchanger 29, it is possible to suppress the amount of refrigerant leaking indoors.

### Embodiment 3

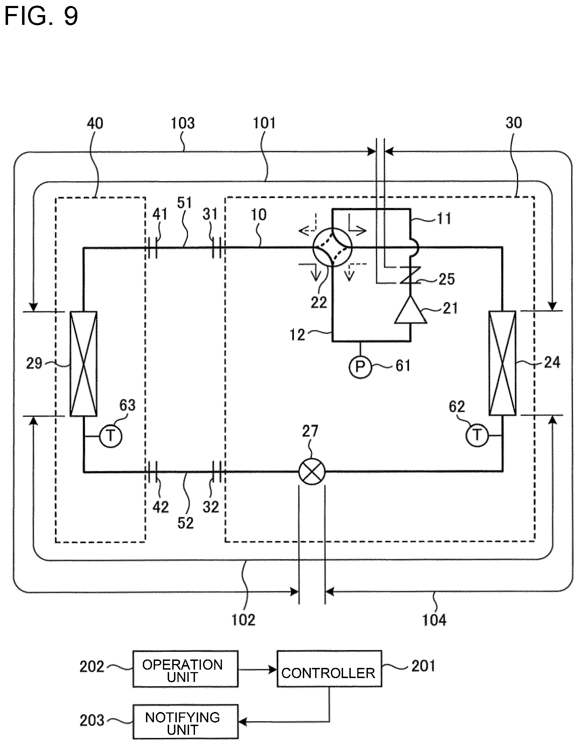

A refrigeration cycle apparatus according to Embodiment 3 of the present disclosure will be described. Fig. 9 is a refrigerant circuit diagram illustrating a schematic configuration of the refrigeration cycle apparatus according to Embodiment 3. In this Embodiment, as the refrigeration cycle apparatus, an air-conditioning apparatus in which the cooling operation and the heating operation can be switched can be exemplified.

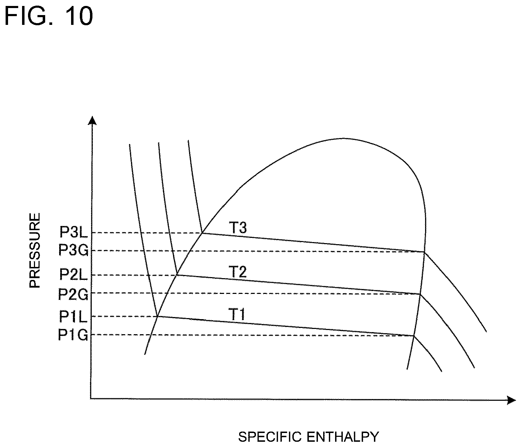

As illustrated in Fig. 9, in Embodiment 3, the refrigerant flow path switching device 22 that switches a flow direction of refrigerant in the refrigeration cycle circuit 10 between a flow direction in the cooling operation and a flow direction in the heating operation is provided. In Fig. 10, the flow direction of refrigerant during the cooling operation is indicated by solid arrows, the flow direction of refrigerant during the heating operation is indicated by he dashed arrows. As the refrigerant flow path switching device 22, a four-way valve is used, for example. The compressor 21 and the refrigerant flow switching device 22 are connected through a discharge flow path 11 and a suction flow path 12 each forming a part of the refrigeration cycle circuit 10. Both during the cooling operation and the heating operation, the high-pressure refrigerant discharged from the compressor 21 flows in the suction flow path 12. The low-pressure refrigerant to be suctioned into the compressor 21 flows through the suction flow path 12, during both the cooling operation and the heating operation. The pressure sensor 61 is provided in the suction flow path 12.

Further, in Embodiment 3, in place of the solenoid valve 23a, a check valve 25 is provided as the first valve. The check valve 25 is provided in the discharge flow path 11. In the refrigeration cycle circuit 10 during the cooling operation, a section between the expansion valve 27 and the check valve 25 including the extension pipe 52, the indoor heat exchanger 29, the refrigerant flow switching device 22, and the compressor 21 is defined as a third section 103, and a section between the check valve 25 and the expansion valve 27 including the refrigerant flow switching device 22 and the outdoor heat exchanger 24 is defined as a fourth section 104. The check valve 25 is provided to allow the flow of refrigerant from the third section 103 toward the fourth section 104, and check the flow of refrigerant from the fourth section 104 toward the third section 103.

During the cooling operation, the outdoor heat exchanger 24 functions as a condenser, and the indoor heat exchanger 29 functions as an evaporator. During the heating operation, the indoor heat exchanger 29 functions as a condenser, and the outdoor heat exchanger 24 functions as an evaporator. During a pump-down operation, the refrigerant flow path switching device 22 switches the flow path to the flow path for the cooling operation, whereby refrigerant is collected mainly in the outdoor heat exchanger 24 of the fourth section 104. Also in the refrigeration cycle circuit 10 of Embodiment 3, a leakage of refrigerant can be determined in the same manner as those in Embodiment 1 or 2. Therefore, according to Embodiment 3, the same effects as those of Embodiment 1 or 2 can be obtained.

The refrigeration cycle apparatus according to Embodiment 4 of the present disclosure will be described. In Embodiment 4, a non-azeotropic refrigerant mixture is used as a refrigerant circulating the refrigeration cycle circuit 10.

Fig. 10 is a p-h diagram illustrating a refrigerant state in the refrigeration cycle apparatus according to Embodiment 4 of the present disclosure. As illustrated in Fig. 10, in Embodiment 4, a saturation gas pressure P1G at an ambient temperature T1 is lower than a saturation liquid pressure P1L at the same ambient temperature T1. Similarly, a saturation gas pressure P2G at an ambient temperature T2 is lower than a saturation liquid pressure P2L at the same ambient temperature T2, and a saturation gas pressure P3G at an ambient temperature T3 is lower than a saturation liquid pressure P3L at the same ambient temperature T3. In this way, when comparing the saturation liquid pressure and the saturation gas pressure of a non-azeotropic refrigerant mixture at the same temperature, the saturation gas pressure is lower. Therefore, in the case where a non-azeotropic refrigerant mixture is used, the saturation gas pressure of the ambient temperature of the third section 103 is used as the pressure Pc. Since the saturation gas pressure lower than the saturation liquid pressure is used as the pressure Pc, it is possible to more reliably prevent erroneous detection in which it is determined that there is a leakage of refrigerant although there is actually no leakage of refrigerant.

The present disclosure is not limited to the above Embodiment, and various modifications can be made. For instance, in the above-mentioned Embodiment, the air-conditioning apparatus is taken as an example of the refrigeration cycle apparatus, but the present disclosure can be applied to other refrigeration cycle devices capable of cooling operation such as chillers.

In addition, in the above Embodiment, a plurality of outdoor units 30 may be provided or a plurality of indoor units 40 may be provided in the refrigeration cycle apparatus, although the refrigeration cycle apparatus having a single outdoor unit 30 and a single indoor unit 40 is exemplified.

Each Embodiment described above can be implemented in conjunction with each other.

### Reference Signs List

10 refrigerant circuit 11 discharge flow path 12 suction flow path 21 compressor 22 refrigerant flow switching device 23 solenoid valve 24 outdoor heat exchanger 25 check valve 27 expansion valve 29 indoor heat exchanger 30 outdoor unit 31,32 joint portion 40 indoor unit 41,42 joint portion 51, 52 extension pipe 61 pressure sensor 62,63 temperature sensor 101 first section 102 second section 103 third section 104 fourth section 201 controller 202 operation unit 203 notifying unit

## Claims

1. A refrigeration cycle apparatus comprising:
a refrigeration cycle circuit (10) in which refrigerant circulates, the refrigeration cycle circuit (10) including
a compressor (21),
an outdoor heat exchanger (24), and
an indoor heat exchanger (29);
in the refrigeration cycle circuit (10), when a section between the outdoor heat exchanger (24) and the indoor heat exchanger (29) including the compressor (21) is defined as a first section (101), and in the refrigeration cycle circuit (10), when a section between the outdoor heat exchanger (24) and the indoor heat exchanger (29) not including the compressor (21) is defined as a second section, a first valve provided in the first section;
a second valve provided in the second section (102);
in the refrigeration cycle circuit (10), when a section between the first valve (23) and the second valve (27) including the indoor heat exchanger (29) is defined as a third section (103), and in the refrigeration cycle circuit (10), when a section between the first valve (23) and the second valve (27) including the outdoor heat exchanger (24) is defined as a fourth section (104), a pressure sensor (61) provided in the third section (103);
a temperature sensor (63) configured to detect an ambient temperature of the third section (103); and
a notifying unit (203) configured to notify of a leakage of the refrigerant,
at least during a period in which the compressor (21) is stopped, each of the first valve (23) and the second valve (27) being configured to check a flow of the refrigerant flowing from the fourth section (104) toward the third section (103),
**characterized in that** the notifying unit (203) being configured to notify of the leakage of the refrigerant when relationships Pa < Pb and Pa < Pc are satisfied where Pb represents a pressure of the third section (103) detected when the compressor (21) is stopped, Pa represents a pressure of the third section (103) detected during the period in which the compressor (21) is stopped and after a time when Pb is detected, and Pc represents a saturation gas pressure of the ambient temperature detected during the period in which the compressor (21) is stopped and after the time when Pb is detected.

2. The refrigeration cycle apparatus of claim 1, wherein the notifying unit (203) is configured not to notify of the leakage of the refrigerant when the pressure Pa, the pressure Pb and the saturation gas pressure Pc satisfy relationships Pa ≥ Pb and Pa < Pc.

3. The refrigeration cycle apparatus of claim 1 or 2, wherein a pump-down operation for collecting the refrigerant into the fourth section (104) is performed, before the compressor (21) is stopped.

4. The refrigeration cycle apparatus of any one of claims 1 to 3, wherein a determination as to whether the pressure Pa, the pressure Pb and the saturation gas pressure Pc satisfy the relationships Pa < Pb and Pa < Pc is made, at least before an operation of the compressor (21) is started.

5. The refrigeration cycle apparatus of any one of claims 1 to 4, wherein each of the first valve (23) and the second valve (27) is any one of a solenoid valve (23), a motor valve, an electronic expansion valve (27), and a check valve (25).

## Patentansprüche

1. Kühlkreislaufvorrichtung, die Folgendes umfasst:
einen Kühlkreislauf (10), in dem Kühlmittel umläuft, wobei der Kühlkreislauf (10) Folgendes umfasst:
einen Kompressor (21),
einen Außenbereich-Wärmetauscher (24), und
einen Innenraum-Wärmetauscher (29);
wobei im Kühlkreislauf (10) dann, wenn ein Teilstück zwischen dem Außenbereich-Wärmetauscher (24) und dem Innenraum-Wärmetauscher (29), das den Kompressor (21) umfasst, als ein erstes Teilstück (101) definiert ist, und im Kühlkreislauf (10) dann, wenn ein Teilstück zwischen dem Außenbereich-Wärmetauscher (24) und dem Innenraum-Wärmetauscher (29), das den Kompressor (21) nicht umfasst, als ein zweites Teilstück definiert ist, ein erstes Ventil im ersten Teilstück vorgesehen ist;
ein zweites Ventil, das im zweiten Teilstück (102) vorgesehen ist;
wobei im Kühlkreislauf (10) dann, wenn ein Teilstück zwischen dem ersten Ventil (23) und dem zweiten Ventil (27), das den Innenraum-Wärmetauscher (29) umfasst, als ein drittes Teilstück (103) definiert ist, und im Kühlkreislauf (10) dann, wenn ein Teilstück zwischen dem ersten Ventil (23) und dem zweiten Ventil (27), das den Außenbereich-Wärmetauscher (24) umfasst, als ein viertes Teilstück (104) definiert ist, ein Drucksensor (61) im dritten Teilstück (103) vorgesehen ist;
einen Temperatursensor (63), der konfiguriert ist, eine Umgebungstemperatur des dritten Teilstücks (103) zu detektieren; und
eine Benachrichtigungseinheit (203), die konfiguriert ist, über ein Austreten des Kühlmittels zu benachrichtigen,
wobei wenigstens während einer Zeitspanne, in der der Kompressor (21) gestoppt ist, das erste Ventil (23) und das zweite Ventil (27) konfiguriert sind, eine Strömung des Kühlmittels, das vom vierten Teilstück (104) zum dritten Teilstück (103) strömt, zu prüfen,
**dadurch gekennzeichnet, dass** die Benachrichtigungseinheit (203) konfiguriert ist, über das Austreten des Kühlmittels zu benachrichtigen, wenn die Beziehungen Pa < Pb und Pa < Pc erfüllt sind, wobei Pb einen Druck des dritten Teilstücks (103) repräsentiert, der detektiert wird, wenn der Kompressor (21) gestoppt ist, Pa einen Druck des dritten Teilstücks (103) repräsentiert, der während der Zeitspanne, in der der Kompressor (21) gestoppt ist, und nach einem Zeitpunkt, zu dem Pb detektiert worden ist, detektiert wird, und Pc einen Sättigungsgasdruck der Umgebungstemperatur repräsentiert, der während der Zeitspanne, in der der Kompressor (21) gestoppt ist, und nach dem Zeitpunkt, zu dem Pb detektiert worden ist, detektiert wird.

2. Kühlkreislaufvorrichtung nach Anspruch 1, wobei die Benachrichtigungseinheit (203) konfiguriert ist, über das Austreten des Kühlmittels nicht zu benachrichtigen, wenn der Druck Pa, der Druck Pb und der Sättigungsgasdruck Pc die Beziehungen Pa ≥ Pb und Pa < Pc erfüllen.

3. Kühlkreislaufvorrichtung nach Anspruch 1 oder 2, wobei ein Auspumpbetrieb zum Sammeln des Kühlmittels im vierten Teilstück (104) ausgeführt wird, bevor der Kompressor (21) gestoppt wird.

4. Kühlkreislaufvorrichtung nach einem der Ansprüche 1 bis 3, wobei eine Feststellung, ob der Druck Pa, der Druck Pb und der Sättigungsgasdruck Pc die Beziehungen Pa < Pb und Pa < Pc erfüllen, wenigstens vor dem Start des Betriebs des Kompressors (21) getroffen wird.

5. Kühlkreislaufvorrichtung nach einem der Ansprüche 1 bis 4, wobei das erste Ventil (23) und das zweite Ventil (27) ein Magnetventil (23), ein Motorventil, ein elektronisches Expansionsventil (27) und/oder ein Prüfventil (25) sind.

## Revendications

1. Appareil à cycle de réfrigération comprenant :
un circuit à cycle de réfrigération (10) dans lequel un réfrigérant circule, le circuit à cycle de réfrigération (10) comprenant
un compresseur (21),
un échangeur de chaleur extérieur (24), et
un échangeur de chaleur intérieur (29) ;
dans le circuit à cycle de réfrigération (10), lorsqu'une section entre l'échangeur de chaleur extérieur (24) et l'échangeur de chaleur intérieur (29) comprenant le compresseur (21) est définie comme une première section (101), et dans le circuit à cycle de réfrigération (10), lorsqu'une section entre l'échangeur de chaleur extérieur (24) et l'échangeur de chaleur intérieur (29) ne comprenant pas le compresseur (21) est définie comme une deuxième section, une première soupape fournie dans la première section ;
une seconde soupape fournie dans la deuxième section (102) ;
dans le circuit à cycle de réfrigération (10), lorsqu'une section entre la première soupape (23) et la seconde soupape (27) comprenant l'échangeur de chaleur intérieur (29) est définie comme une troisième section (103), et dans le circuit à cycle de réfrigération (10), lorsqu'une section entre la première soupape (23) et la seconde soupape (27) comprenant l'échangeur de chaleur extérieur (24) est définie comme une quatrième section (104), un capteur de pression (61) fourni dans la troisième section (103) ;
un capteur de température (63) configuré pour détecter une température ambiante de la troisième section (103) ; et
une unité de notification (203) configurée pour notifier une fuite du réfrigérant,
au moins durant une période dans laquelle le compresseur (21) est arrêté, chacune de la première soupape (23) et de la seconde soupape (27) étant configurée pour vérifier un écoulement du réfrigérant s'écoulant à partir de la quatrième section (104) vers la troisième section (103),
**caractérisé en ce que** l'unité de notification (203) est configurée pour notifier la fuite du réfrigérant lorsque des relations Pa < Pb et Pa < Pc sont satisfaites où Pb représente une pression de la troisième section (103) détectée lorsque le compresseur (21) est arrêté, Pa représente une pression de la troisième section (103) détectée durant la période dans laquelle le compresseur (21) est arrêté et après un moment où Pb a été détectée, et Pc représente une pression de gaz de saturation de la température ambiante détectée durant la période dans laquelle le compresseur (21) est arrêté et après le moment où Pb a été détectée.

2. Appareil à cycle de réfrigération selon la revendication 1, dans lequel l'unité de notification (203) est configurée pour ne pas notifier la fuite du réfrigérant lorsque la pression Pa, la pression Pb et la pression de gaz de saturation Pc satisfont à des relations Pa ≥ Pb et Pa < Pc.

3. Appareil à cycle de réfrigération selon la revendication 1 ou 2, dans lequel une opération d'évacuation pour collecter le réfrigérant dans la quatrième section (104) est réalisée, avant que le compresseur (21) ne soit arrêté.

4. Appareil à cycle de réfrigération selon l'une quelconque des revendications 1 à 3, dans lequel il est déterminé si la pression Pa, la pression Pb et la pression de gaz de saturation Pc satisfont aux relations Pa < Pb et Pa < Pc, au moins avant qu'un fonctionnement du compresseur (21) ne débute.

5. Appareil à cycle de réfrigération selon l'une quelconque des revendications 1 à 4, dans lequel chacune de la première soupape (23) et de la seconde soupape (27) est l'une quelconque parmi une soupape électromagnétique (23), une soupape motorisée, un détendeur électronique (27), et une soupape de non-retour (25).
